# EUROPÄISCHE PATENTSCHRIFT

(11) **EP 2 436 593 B1**
(45) Veröffentlichungstag und Bekanntmachung des Hinweises auf die Patenterteilung: **27.11.2013**
(21) Anmeldenummer: 10012695.2
(22) Anmeldetag: 01.10.2010
(51) Int. Cl.: B63B 27/12, B63B 35/00, F03D 1/00

(54) **Schiff und Verfahren zum Befördern und Aufstellen von Offshore-Strukturen**
Ship and method for transporting and setting up offshore structures
Bateau et procédé de transport et d'établissement de structures offshore

(43) Veröffentlichungstag der Anmeldung: 04.04.2012
(73) Patentinhaber: Nordic Yards Holding GmbH, 23966 Wismar (DE)
(72) Erfinder: Hadeler, Stefan, 24326 Ascheberg (DE); Bergmann, André, 23970 Wismar (DE); Linnemann, Matthias, 23970 Wismar (DE); Falk, Wolfgang, 18069 Rostock (DE); Monnnig, Frank, 18233 Neubukow (DE)
(74) Vertreter: Hauck Patent- und Rechtsanwälte

(56) Entgegenhaltungen:
- WO-A1-2006/076920
- WO-A2-2004/087494
- FR-A1- 2 849 877
- US-A1- 2003 192 465

## Beschreibung

Die Erfindung bezieht sich auf ein Schiff und ein Verfahren zum Befördern und Aufstellen von Offshore-Strukturen. Das Schiff und das Verfahren sind insbesondere für das Befördern und Aufstellen von Offshore-Windenergieanlagen bestimmt.

Der Betrieb von Windenergieanlagen auf dem Meer verspricht aufgrund hoher durchschnittlicher Windgeschwindigkeiten eine hohe Stromausbeute. Deshalb sollen verstärkt Offshore-Windenergieanlagen errichtet werden. In der Nordsee sind mehrere große Flächen für die Errichtung von Windenergieanlagen ausgewiesen. Diese befinden sich meist außerhalb der Zwölfmeilenzone. Die Wassertiefen betragen zehn bis einige zehn Meter. Vielfach liegen sie im Bereich von 40m bis 50m.

Bei der Errichtung des Offshore- Windparks Alpha-Ventus wurden die Windenergieanlagen mittels der Plattform Thialf der niederländischen Firma Heerema gesetzt. Hierbei handelt es sich um ein sehr großes Arbeitsgerät, das typischerweise für die Errichtung von Ölplattformen eingesetzt wird. Dabei verbleibt das Arbeitsgerät über längere Zeiträume am Aufstellort. Das Errichten einer Offshore-Windenergieanlage dauert jedoch nur ein bis zwei Tage und danach muss die Plattform an einen anderen Aufstellort geschleppt werden. Der Einsatz dieses Arbeitsgeräts für das Errichten von Windenergieanlagen ist zu aufwendig und teuer.

Die WO 2004/087494 A2 beschreibt ein Schiff zum Transportieren von mehreren kompletten Windenergieanlagen in aufrechter Ausrichtung. Das Schiff hat Mittel zum Transportieren der Windenergieanlagen von einem Laderaum zu einer Entladeposition. Ferner weist das Schiff Winschen mit zumindest drei Leinen mit Befestigungsmitteln zum Befestigen an zumindest drei Aufnahmepunkten auf dem Fundament der Windturbine auf. Die Leinen sind so an der Entladeposition angeordnet, dass ihre zu den Aufnahmepunkten auf dem Fundament verlaufenden Abschnitte in horizontal voneinander beabstandet sind. Das Schiff hat am Heck vorstehende Arme, auf denen die Winschen platziert sind. Mittels der über die Winschen geführten Leinen können die Windenergieanlagen an ihren Fundamenten nach unten abgelassen werden. Die Windenergieanlagen werden von ihrer Position im Laderaum auf Schienen zu der Entladeposition transportiert. An diesem Spezialschiff ist nachteilig, dass die Windenergieanlagen fertig montiert mit ihrem Fundament transportiert werden, sodass die Ladung hoch über das Schiff hinaussteht. Mit zunehmender Höhe bzw. Anzahl der auf dem Schiff positionierten Windenergieanlagen wird die Stabilität des Schiffes zunehmend beeinträchtigt. Hierdurch werden Transportkapazität und Einsatzmöglichkeiten des Schiffes eingeschränkt.

Die WO 2007/091042 A1 beschreibt ein Verfahren und ein System zum Transportieren von Offshore-Strukturen sowie Windenergieanlagen. Diese weisen einen Tragrahmen auf, in den die Windenergieanlage an Land in aufrechter Stellung eingesetzt wird. Der Tragrahmen wird zum Heben der Windenergieanlage auf ein Transportschiff verwendet, auf dem sie in aufrechter Anordnung gehalten wird. Das Transportschiff hat schwenkbare Kranarme, an denen der Transportrahmen aufgehängt ist. Die Windenergieanlage wird durch Schwenken der Kranarme von einem Kai auf das Transportschiff übernommen. Am Aufstellort wird die Windenergieanlage durch Schwenken der Kranarme in entgegengesetzter Richtung auf ein vorbereitetes Fundament gesetzt. Das Fundament weist einen Rahmen auf, der mit dem Tragrahmen zusammenwirkt. Der Tragrahmen ist mit einer Vielzahl von Beinen mit hydraulisch gesteuerten Füßen versehen. Der Rahmen auf dem Fundament weist eine entsprechende Anzahl von Tragstrukturen auf, auf denen die Füße schließlich ruhen. Die Füße sind in Abhängigkeit von einer hydraulischen Steuerung entlang einer vertikalen Achse beweglich und bilden eine Dämpfungsanordnung für die Montage der Windenergieanlage auf dem Fundament. Das Schiff ist nur für den Transport des Mastes einer einzigen Windenergieanlage geeignet. Die Fundamente müssen gesondert gesetzt werden. Nach der Montage muss das Transportschiff zu einem Hafen gefahren werden, um eine weitere Windenergieanlage aufzunehmen. Dies ist nachteilig, wenn mehrere Windenergieanlagen aufgestellt werden müssen, wie bei Windparks.

Bei den bekannten Transportschiffen wird das Aufstellen von Offshore-Strukturen durch den Einfluss von Seegang, Strömung und Wind stark behindert.

Die FR 2 849 877 A1 beschreibt eine Schwimmplattform mit Hubstützen. Auf der Plattform ist ein Kran zum Transportieren von Masten von Windenergieanlagen vorhanden. Die Plattform hat eine ausklappbare Brücke, um einen Mast mittels des Krans auf einem im Meeresgrund verankerten Fundament einer Windenergieanlage abzusetzen.

Davon ausgehend liegt der Erfindung die Aufgabe zugrunde, ein Schiff und ein Verfahren zum Befördern und Aufstellen von Offshore-Strukturen zur Verfügung zu stellen, das unabhängiger von Seegangs- und Wetterbedingungen einsetzbar ist und mit dem in einer bestimmten Zeit eine größere Anzahl Offshore-Strukturen befördert und aufgestellt werden können.

Die Aufgabe wird durch ein Schiff mit den Merkmalen von Anspruch 1 gelöst. Vorteilhafte Ausgestaltungen des Schiffs sind in Unteransprüchen angegeben.

Das erfindungsgemäße Schiff zum Befördern und Aufstellen von Offshore-Strukturen hat
- einen Schiffsrumpf mit einem U-förmigen Querschnitt, der ein offenes Heck und achterlich über die Hinterkante des Schiffsbodens hinausstehende Überhänge der Seitenwände aufweist, gekennzeichnet durch
- in den Schiffsrumpf integrierte Hubstützensysteme mit Hubstützen, die in Vertikalrichtung mit ihren unteren Enden in Positionen unterhalb des Schiffsbodens verfahrbar sind und
- einen auf dem oberen Rand mindestens einer Seitenwand verfahrbaren Kran.

Für die Schiffsfestigkeit ist der U-förmige Querschnitt des Schiffsrumpfes besonders vorteilhaft. Das Schiff ist deshalb besonders zum Befördern schwergewichtiger Offshore-Strukturen geeignet. Für die Schiffshydrodynamik und die Verbindung beider Strukturen vorteilhaft ist zudem, dass die Hubstützensysteme in die Seitenwände integriert werden können. Beim Aufstellen der Offshore-Strukturen kann das Schiff durch Absenken der Hubstützen auf den Meeresgrund fixiert werden. Hierdurch wird das Schiff in einer stabilen Bezugslage gehalten, die unabhängig von Seegang, Strömungs- und Windeinflüssen ist. Dies ist vorteilhaft für das Aufstellen von Windenergieanlagen, weil die Masten sehr genau vertikal ausgerichtet sein müssen. Ferner hat der U-Querschnitt den Vorteil, dass die oberen Ränder der Seitenwände als Basis für den verfahrbaren Kran nutzbar sind. Infolgedessen kann der Kran oberhalb der Offshore-Strukturen verfahren werden, mit denen das Schiff beladen ist. Das Schiff hat vorzugsweise ein Ladedeck an der Oberseite des Schiffsbodens, um einen hohen Laderaum zur Verfügung zu stellen, der vom Kran überfahrbar ist. Mittels des verfahrbaren Krans können auf dem Ladedeck gelagerte Offshore-Strukturen aufgenommen und zu den Überhängen transportiert werden. Zwischen den Überhängen können die Offshore-Strukturen abgefiert und auf den Meeresboden abgesetzt werden, da der Schiffsrumpf dort kein Ladedeck bzw. keinen Schiffsboden aufweist. Mehrere in Längsrichtung des Schiffsrumpfes hintereinander platzierte Offshore-Strukturen können in einer Fahrt zu ihren Aufstellorten gebracht und nacheinander aufgestellt werden. Der Einsatz des Schiffes ist somit besonders ökonomisch. Der Kran kann Offshore-Strukturen in Vertikalausrichtung transportieren, weil die Lastaufnahme des Krans die Offshore-Strukturen an einem hohen Angriffspunkt greifen kann. Insbesondere kann das Schiff Masten und Fundamente von Windenergieanlagen in vertikaler Ausrichtung transportieren und zusammenfügen. Die Windenergieanlage muss nicht einteilig mit am Fundament montiertem Mast transportiert und abgesetzt werden. Die Ladung ragt deshalb weniger hoch vom Schiffsrumpf empor als bei der WO 2004/087494 A2, sodass das Schiff mehr Einsatzmöglichkeiten hat.

Der Kran ist vorzugsweise entlang eines auf dem oberen Rand mindestens einer Seitenwand angeordneten Schienensystems verfahrbar.

Gemäß einer Ausgestaltung weist der Kran eine Kranbrücke auf, die auf beiden Seitenwänden abgestützt ist. Hierdurch werden die Lasten optimal in den Schiffsrumpf übergeleitet. Die Erfindung bezieht Ausgestaltungen ein, bei denen auf dem oberen Rand nur einer Seitenwand ein Kran verfahrbar angeordnet ist. Ferner bezieht sie Ausgestaltungen ein, bei denen auf dem oberen Rand beider Seitenwände voneinander getrennte Kräne verfahrbar sind.

Gemäß einer weiteren Ausgestaltung ist der Kran ein Portalkran, der die Kranbrücke auf Stützen trägt, die auf den oberen Rändern der Seitenwände verfahrbar sind. Die Kranbrücke ist bei dem Portalkran besonders hoch angeordnet, sodass das Schiff zum Befördern und Aufstellen besonders hoher Offshore-Strukturen nutzbar ist. Gemäß einer anderen Ausgestaltung ist der Kran ein Brückenkran. Die Kranbrücke des Brückenkrans kann direkt auf den oberen Rändern der Seitenwände abgestützt und verfahrbar sein. Gemäß einer weiteren Ausgestaltung ist die Kranbrücke des Brückenkrans auf Schienen verfahrbar, die über Stützen auf den oberen Rändern der Seitenwände abgestützt sind. Bei diesem Schiff ist die Kranbrücke besonders hoch angeordnet, sodass es besonders hohe Offshore-Strukturen befördern und aufstellen kann.

Gemäß einer Ausgestaltung sind die Seitenwände im Bereich der Überhänge an der Unterseite ausgespart, sodass der untere Rand der Überhänge oberhalb der Wasserlinie des Schiffsrumpfs bei Fahrt angeordnet ist. Das Heck des Schiffes ist somit konsolenartig ausgebildet, sodass das Schiff mit dem Heck über eine Pier gefahren werden kann, sodass zwischen den Überhängen ein Bereitstellort für Offshore-Strukturen angeordnet ist. Auf dem Bereitstellort platzierte Offshore-Strukturen können mit Hilfe des auf dem Schiff angeordneten Kranes aufgenommen und auf dem Schiff abgesetzt werden. Das Schiff kann somit ohne Einsatz von Hafenkränen Offshore-Strukturen in einem Hafen aufnehmen. Die Aufnahme von Ladung im Hafen kann grundsätzlich ohne Einsatz der Hubstützen erfolgen. Bevorzugt wird das Schiff beim Beladen durch Absenken der Hubstützen am Hafengrund fixiert.

Gemäß einer Ausgestaltung ist das Schiff ein Halbtaucher mit in den Schiffsrumpf integrierten Ballasttanks und Pumpen zum Befüllen der Ballasttanks mit Ballastwasser und/oder Lenzen des Ballastwassers aus den Ballasttanks. Das Schiff kann mit entleerten Ballasttanks zum Aufstellort gefahren werden. Am Aufstellort können die Ballasttanks geflutet werden, damit das Schiff tiefer eintaucht und stabiler im Wasser liegt. Bei dieser Ausgestaltung wird die Lage des Schiffes zusätzlich durch den Ballast stabilisiert. Bei Ausführung als Halbtaucher kann das Schiff auch für andere Transportzwecke genutzt werden, bei denen durch das Heck Ladung aufgenommen und/oder abgegeben werden muss. Beispielsweise kann das Schiff zum Transportieren von Pontons oder anderer schwimmfähiger Ladung genutzt werden, die durch das offene Heck eingeschwommen bzw. herausgeschwommen wird.

Für eine Fixierung in stabiler Lage weist das Schiff vorzugsweise mindestens drei Hubstützensysteme auf. Gemäß einer Ausgestaltung weist das Schiff drei Hubstützensysteme auf, wobei ein Hubstützensystem auf der Mittelachse vom in den Schiffsrumpf integriert ist und zwei weitere Hubstützensysteme im Schiffsrumpf hinten in die beiden Seitenwände integriert sind.

Gemäß einer weiteren Ausgestaltung weist das Schiff vier Hubstützensysteme auf, wobei zwei Hubstützensysteme im Schiffsrumpf vom einander gegenüberliegend in die Seitenwände integriert sind und zwei weitere Hubstützensysteme im Schiffsrumpf hinten einander gegenüberliegend in die Seitenwände integriert sind. Bei dieser Ausgestaltung können die Hubstützensysteme weniger stark dimensioniert werden als bei der Ausgestaltung mit drei Hubstützensystemen, bei der das vordere Hubstützensystem höheren Belastungen als die beiden hinteren Hubstützensysteme ausgesetzt ist.

Der Bug des Schiffes kann in herkömmlicher Art ausgebildet sein, ohne oder mit Bugnase. Gemäß einer weiteren Ausgestaltung hat das Schiff ein vom auf dem Schiffsrumpf angeordnetes Deckhaus. Das vom auf dem Schiffsrumpf angeordnete Deckhaus schränkt den Laderaum nicht ein.

Es versteht sich, dass das Schiff einen Schiffsantrieb aufweist. Dieser kann in verschiedener Weise ausgestaltet sein. Gemäß einer Ausgestaltung weist das Schiff einen Schiffsschraubenantrieb und vordere und hintere Manövrierhilfen auf. Der Schiffsschraubenantrieb in Verbindung mit den Bugstrahlrudern ermöglicht eine genaue Positionierung des Schiffes am Aufstellort und im Hafen, bevor er mit den Hubstützen fixiert ist. Alternativ kann der Schiffsantrieb Ruderpropeller umfassen, mit denen das Schiff exakt manövrierbar ist.

Gemäß einer weiteren Ausgestaltung weist das Schiff ein dynamisches Positionierungssystem auf. Mittels des dynamischen Positionierungssystems kann das Schiff automatisch am Aufstellort positioniert werden, bevor es mittels der Hubstützen am Meeresgrund fixiert ist.

Gemäß einer weiteren Ausgestaltung weist das Schiff Einrichtungen zum Fixieren von Fundamenten und/oder Masten von Windenergieanlagen in vertikaler Ausrichtung auf dem Schiffsrumpf auf. Die Einrichtungen zum Fixieren umfassen gemäß einer weiteren Ausgestaltung Aufnahmen in der Oberseite des Schiffsrumpfs, in die Fundamente und/oder Masten einsetzbar sind. Die Aufnahmen können zum Fixieren von Masten einen Lochkranz haben, auf den der Mast mit einem Verschraubring aufsetzbar ist, der einen komplementären Lochkranz aufweist. Durch Einsetzen von Verschraubungen in die Lochkränze ist der Mast mit dem Schiffsrumpf verschraubbar. Gemäß einer Ausgestaltung sind die Aufnahmen durch einen Gang im Schiffsrumpf begehbar, damit die Verschraubungen angebracht und gelöst werden können, falls der Verschraubring innen im Mast angeordnet ist.

Gemäß einer weiteren Ausgestaltung weist der Schiffsrumpf Befestigungseinrichtungen für Laschsysteme auf. Hierbei kann es sich insbesondere um Spannseile und/oder Stangen mit endseitigen Befestigungsmitteln und ggfs. Spanneinrichtungen handeln.

Das Schiff kann in verschiedener Weise mit Offshore-Strukturen bestückt werden. Gemäß einer Ausgestaltung ist es entweder homogen mit mehreren, in Richtung der Schiffslängsachse hintereinander angeordneten Fundamenten oder Masten von Windenergieanlagen oder heterogen abwechselnd mit Masten und Fundamenten von Windenergieanlagen bestückt. Bei der heterogenen Bestückung ist bevorzugt neben dem Heck des Schiffes ein Fundament angeordnet, da dieses als erstes abgesetzt werden muss, um danach einen Mast auf dem Fundament abzusetzen. Hierbei muss die Position des Schiffes nicht gewechselt werden. Grundsätzlich ist es aber auch möglich, das Schiff heterogen mit einer Gruppe Masten und darauffolgend einer Gruppe Fundamenten zu bestücken. Nach dem Absetzen der Fundamente können die Masten auf den abgesetzten Fundamenten angebracht werden. Hierzu ist zumindest ein Positionswechsel erforderlich.

Ferner wird die Erfindung durch ein Verfahren mit den Merkmalen des Anspruchs 15 gelöst.

Vorteilhafte Ausgestaltungen des Verfahrens sind in Unteransprüchen angegeben.

Bei dem erfindungsgemäßen Verfahren zum Befördern und Aufstellen von Offshore-Strukturen auf einem Schiff gemäß einem der zuvor erläuterten Ansprüche wird
- das Schiff mit den Offshore-Strukturen beladen,
- das beladene Schiff zum Aufstellort der Offshore-Strukturen gefahren,
- das Schiff am Aufstellort mittels Hubstützen am Meeresgrund fixiert,
- die Offshore-Strukturen mittels des Krans zwischen den achterlichen Überhängen der Seitenwände am Aufstellort abgesetzt und
- die Hubstützen vom Meeresgrund gelöst.

Gemäß einer Ausgestaltung wird das Schiff vor dem Beladen mittels Hubstützen am Grund des Hafens fixiert und werden nach dem Beladen die Hubstützen vom Grund des Hafens gelöst.

Gemäß einer Ausgestaltung wird das Schiff beim Fixieren am Meeresgrund durch Fluten der Ballasttanks tiefer eingetaucht. Hierdurch wird der Meeresgrund unterhalb der Hubstützen verdichtet, um somit eine feste Auflage zu bieten.

Gemäß einer anderen Ausgestaltung wird das Schiff mittels der Hubstützen mit dem Schiffsrumpf zumindest teilweise aus dem Wasser herausgehoben. Hierdurch wird die Belastung der Hubstützen erhöht und das Schiff sicherer am Grund fixiert. Wenn der Schiffsrumpf mittels der Hubstützen nur teilweise aus dem Wasser herausgehoben wird, wirkt der Auftrieb auf dem Schiffsrumpf. Hierdurch werden die Hubstützensysteme entlastet, sodass diese weniger stark dimensioniert sein müssen, als bei einem Schiff, dessen Schiffsrumpf mittels der Hubstützensysteme vollständig aus dem Wasser herausgehoben werden kann.

Gemäß einer Ausgestaltung wird das Schiff bis zum Fixieren der Hubstützen mittels eines dynamischen Positionierungssystems am Aufstellort der Offshore-Strukturen und/oder am Beladungsort im Hafen positioniert.

Gemäß einer weiteren Ausgestaltung wird das Schiff mit Offshore-Strukturen beladen, indem das Schiff mit den achterlichen Überhängen der Seitenwände über eine Pier gefahren wird, sodass die Überhänge zwischen sich einen Bereitstellort für Offshore-Strukturen aufnehmen und auf dem Bereitstellort platzierte Offshore-Strukturen mit Hilfe des Krans aufgenommen und auf dem Schiffsrumpf platziert werden.

Gemäß einer weiteren Ausgestaltung wird das Schiff mit Windenergieanlagen beladen und werden die Windenergieanlagen am Aufstellort aufgestellt.

Gemäß einer weiteren Ausgestaltung wird das Schiff mit Fundamenten und/oder Masten von Windenergieanlagen in vertikaler Ausrichtung beladen und werden die Fundamente und/oder Masten von Windenergieanlagen am Aufstellort aufgestellt.

Gemäß einer weiteren Ausgestaltung wird das Schiff in Längsrichtung hintereinander mit mehreren Fundamenten von Windenergieanlagen oder mehreren Masten von Windenergieanlagen oder abwechselnd Masten und Fundamenten von Windenergieanlagen beladen und werden am Aufstellort die Fundamente aufgestellt oder die Masten von Windenergieanlagen auf Fundamenten von Windenergieanlagen angebracht oder abwechselnd Fundamente aufgestellt und darauf die Masten von Windenergieanlagen angebracht.

Die Erfindung wird nachfolgend anhand der anliegenden Zeichnungen eines Ausführungsbeispieles näher erläutert. In den Zeichnungen zeigen:
- Fig. 1a-c: ein Schiff mit drei Hubstützensystemen bestückt mit Fundamenten und Masten von Windenergieanlagen in Seitenansicht (Fig. 1a), einem vertikalen Längsschnitt (Fig. 1b) und in der Draufsicht (Fig. 1c);
- Fig. 2a-c: ein Schiff mit vier Hubstützensystemen bestückt mit Fundamenten und Masten von Windenergieanlagen in Seitenansicht (Fig. 2a), einem vertikalen Längsschnitt (Fig. 2b) und in der Draufsicht (Fig. 2c);
- Fig. 3a-i: das Schiff von Fig. 2 während der Fahrt (Fig. 3a), mit abgesenkten Hubstützen am Aufstellort (Fig. 3b), beim Aufnehmen eines Fundaments (Fig. 3c), beim Absetzen des Fundaments (Fig. 3d und e), beim Aufnehmen eines Mastes (Fig. 3f), beim Transportieren des Mastes (Fig. 3g), beim Positionieren des Mastes über dem Fundament (Fig. 3h), beim Aufsetzen des Mastes auf dem Fundament (Fig. 3i) jeweils in einem vertikalen Längsschnitt;
- Fig. 4: das Schiff von Fig. 2 mit abgesenkten Hubstützen und aus dem Wasser herausgehobenem Schiffsrumpf am Aufstellort in einem vertikalen Längsschnitt;

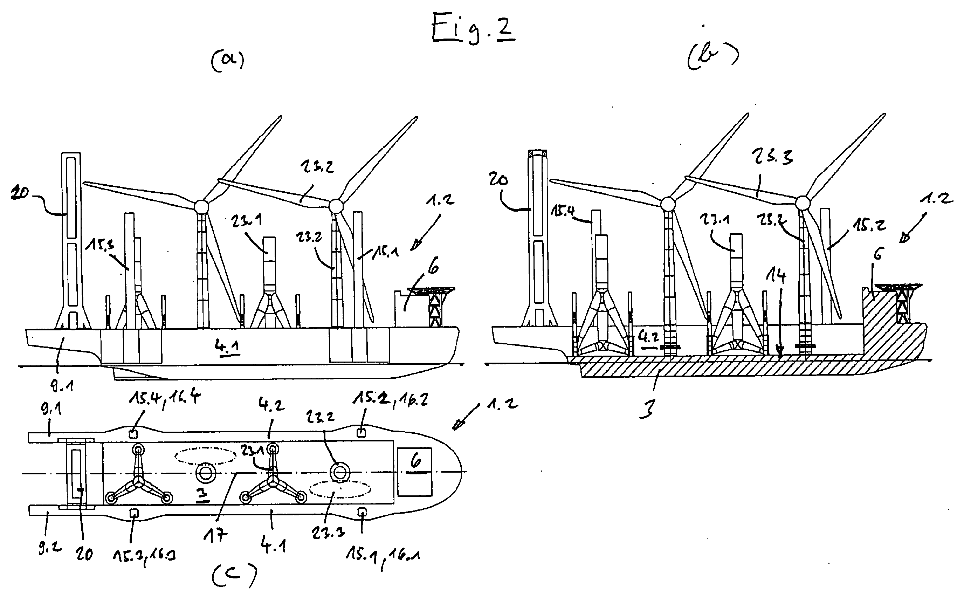

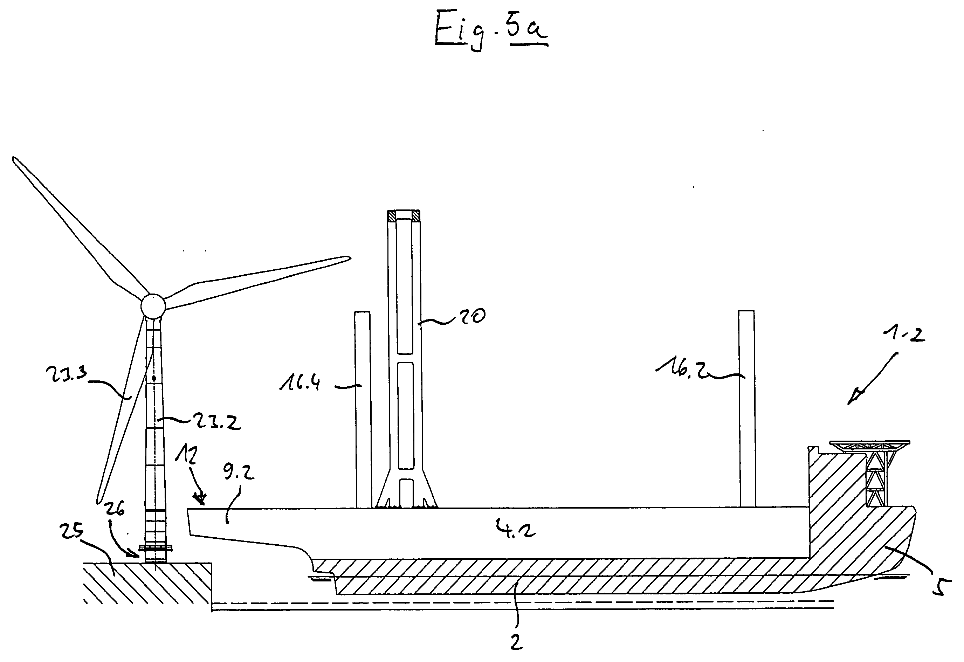

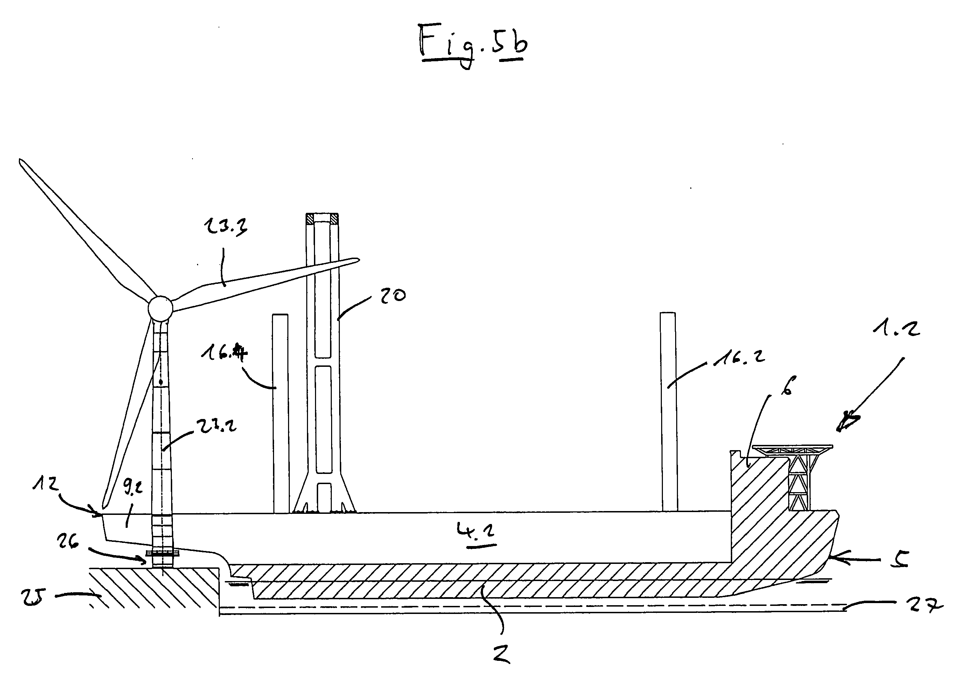

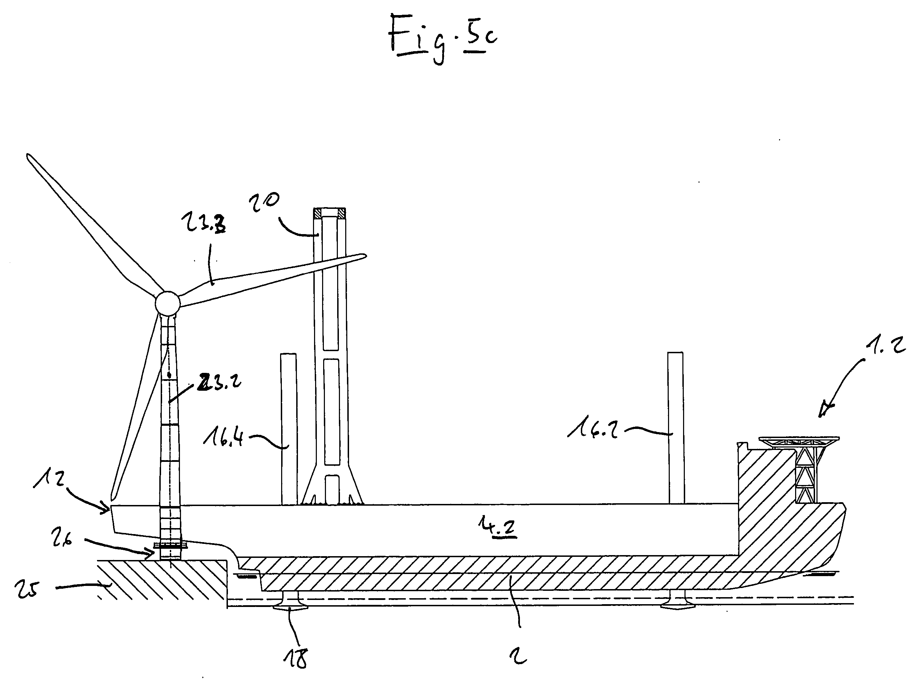

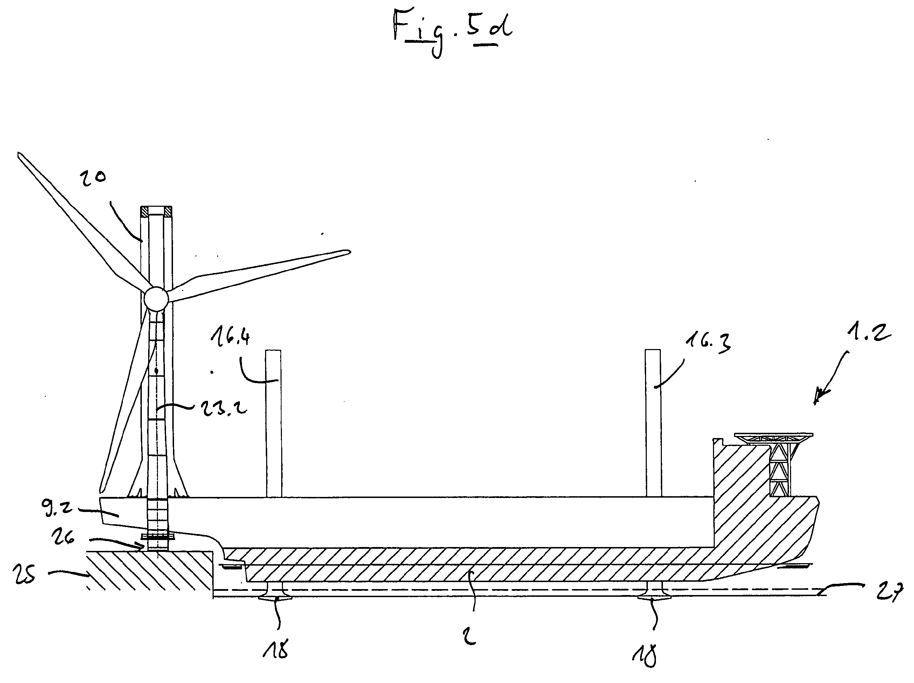

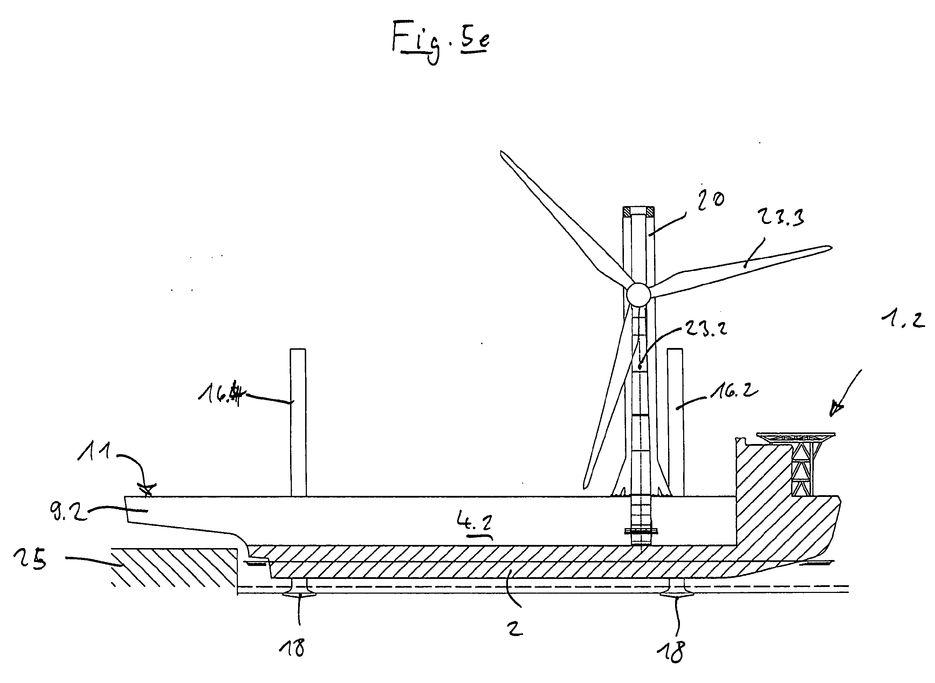

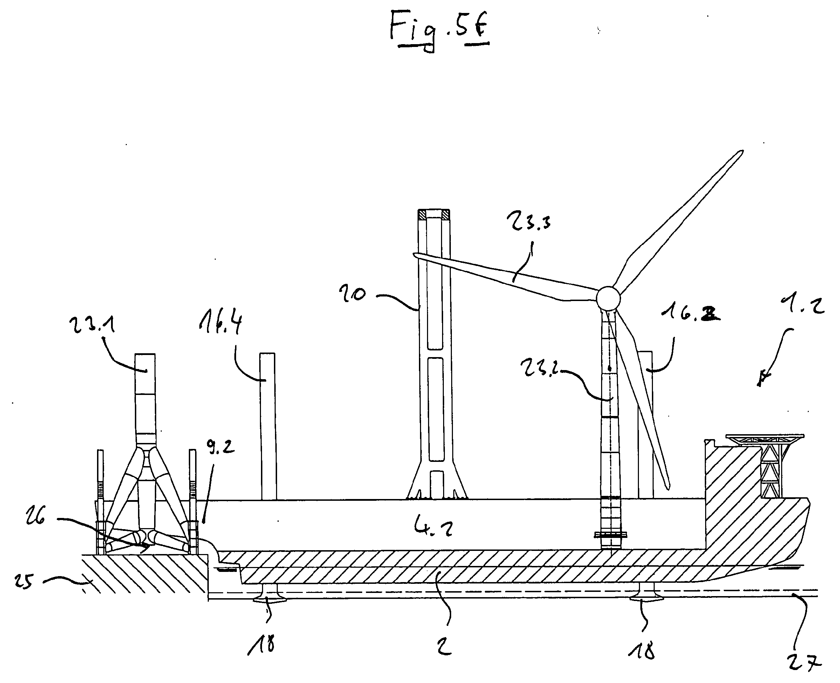

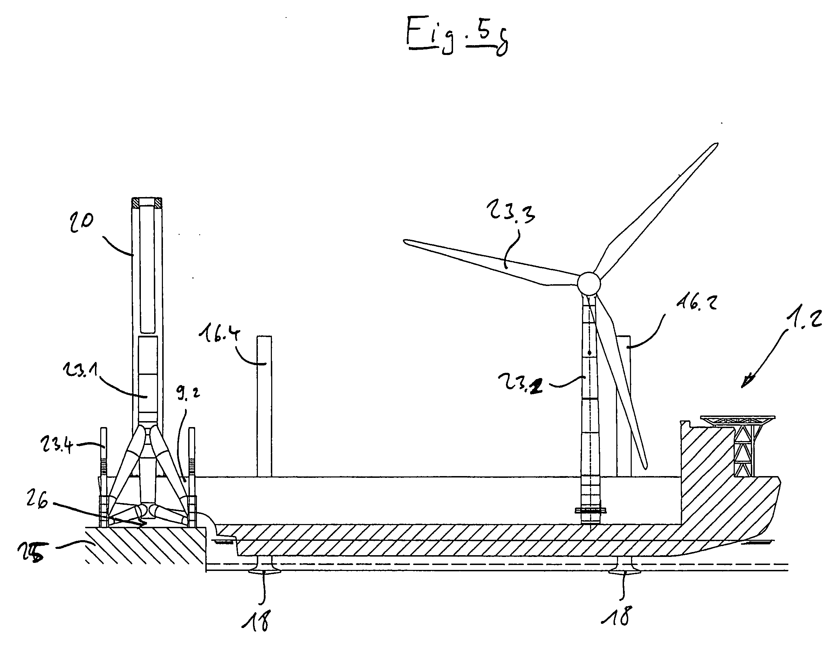

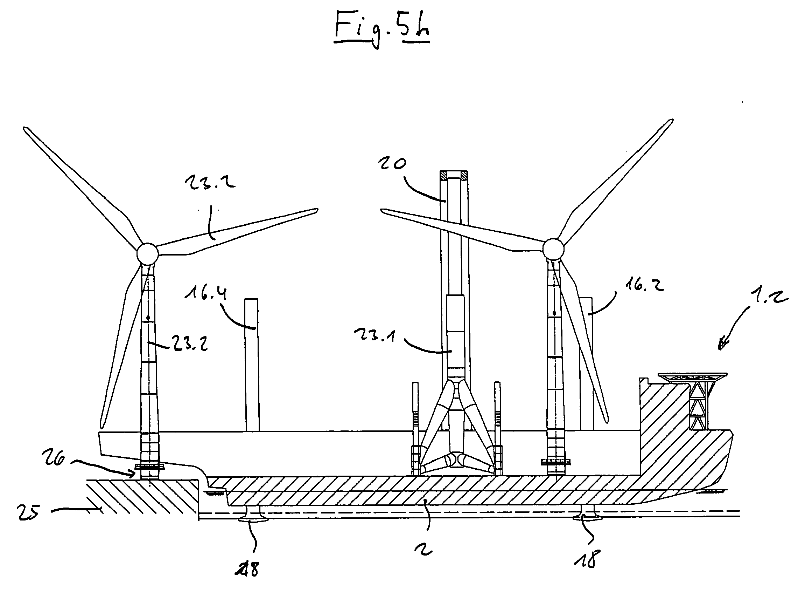

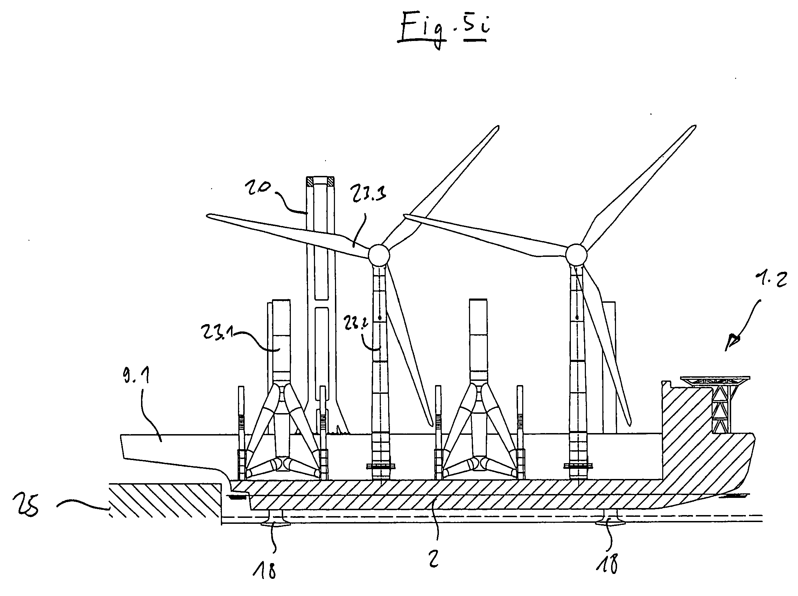

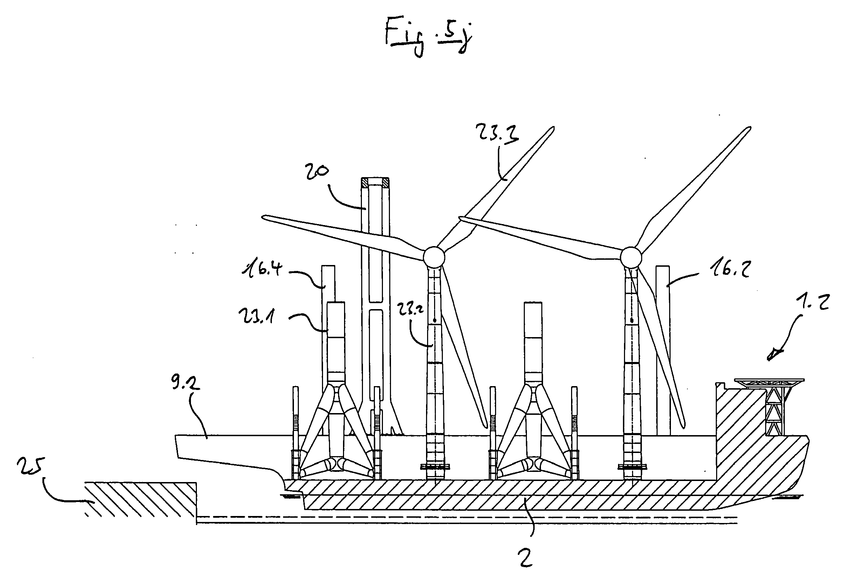

- Fig. 5a-j: das Schiff von Fig. 2 beim Manövrieren zu einem Bereitstellort für Windenergieanlagen auf einer Pier (Fig. 5a), beim Aufnehmen des Bereitstellortes zwischen den Überhängen (Fig. 5b), beim Absenken der Hubstützen in den Hafengrund (Fig. 5c), beim Aufnehmen des Mastes einer Windenergieanlage (Fig. 5d), beim Absetzen des Mastes auf dem Schiff (Fig. 5e), beim Verfahren des Portalkrans zur Bereitstellposition (Fig. 5f), beim Aufnehmen eines Fundaments (Fig. 5g), beim Absetzen des Fundaments auf dem Schiffsrumpf (Fig. 5h), beim Positionieren des Portalkrans in Fahrtstellung (Fig. 5i), beim Ablegen von der Pier mit hochgefahrenen Hubstützen (Fig. 5j), jeweils in einem vertikalen Längsschnitt;
- Fig. 6a-c: das Schiff von Fig. 2 homogen mit Fundamenten bestückt in Seitenansicht (Fig. 6a), in einem vertikalen Längsschnitt (Fig. 6b) und in der Draufsicht (Fig. 6c).
- Fig. 7a-c: das Schiff von Fig. 2 homogen mit Masten von Windenergieanlagen bestückt in Seitenansicht (Fig. 7a), in einem vertikalen Längsschnitt (Fig. 7b) und in der Draufsicht (Fig. 7c);

In der nachfolgenden Erläuterung verschiedener Ausführungsbeispiele sind einander entsprechende Teile mit denselben Bezugsziffern versehen.

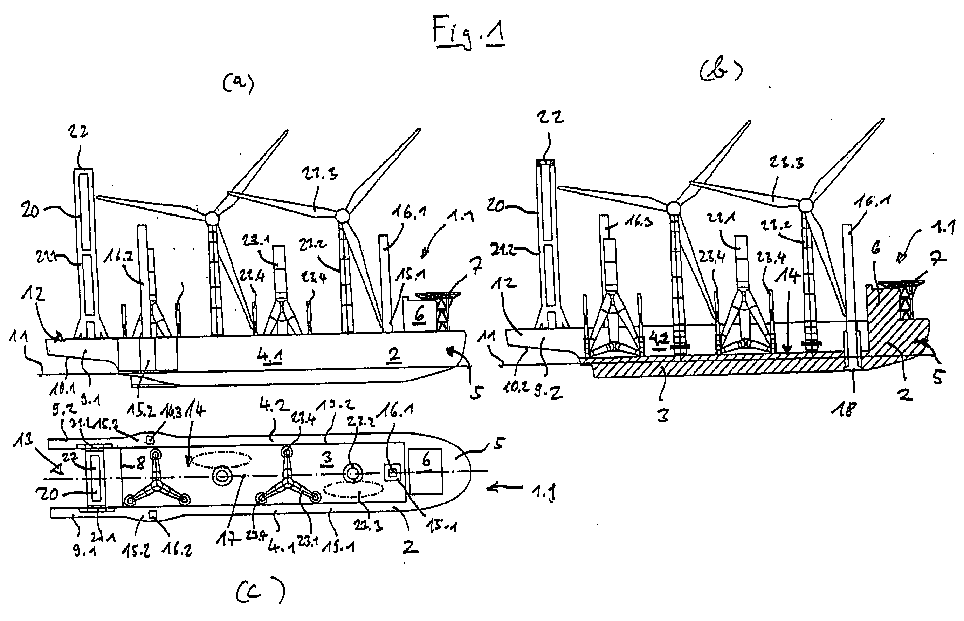

Gemäß Fig. 1 weist ein Schiff 1.1 zum Befördern und Aufstellen von Offshore-Strukturen einen Schiffsrumpf 2 auf, der einen U-förmigen Querschnitt mit einem Schiffsboden 3 und Seitenwänden 4.1, 4.2 aufweist. Vom hat das Schiff einen konventionellen Bug 5. Ferner ist im vorderen Bereich auf dem Schiff ein Deckshaus 6 angeordnet. Optional ist ein Hubschrauberlandedeck 7 vorhanden.

Der Schiffsboden 3 und die Seitenwände 4.1, 4.2 sowie die hintere Wand des Deckhauses 6 begrenzen einen Laderaum im Schiffsrumpf 2.

Die Seitenwände 4.1, 4.2 des Schiffsrumpfs haben über die Hinterkante 8 des Schiffsbodcns 3 hinausstehende Überhänge 9.1, 9.2. Die Überhänge 9.1, 9.2 haben jeweils unten eine Aussparung 10.1, 10.2, deren oberer Rand oberhalb der Wasserlinie 11 angeordnet ist, wenn das Schiff in Fahrt ist. Somit ist das Heck 12 des Schiffes in Seitenansicht konsolenförmig ausgebildet. Zwischen den Überhängen 8.1, 8.2 weist der Schiffsrumpf 2 eine große Öffnung 13 auf. Ferner ist er am Heck 12 nach hinten geöffnet.

In dem Schiffsrumpf 2 ist ein nicht gezeigter Schiffsantrieb angeordnet, der einen Schiffsschraubenantrieb und vordere und hintere Manövrierhilfen (z. B. Bugstrahlruder) und die zugehörigen Antriebsmotoren umfasst.

An der Oberseite des Schiffsbodens 3 befindet sich ein Ladedeck 14.

Ferner sind in den Schiffsrumpf 2 Hubstützensysteme 15.1, 15.2, 15.3 mit Hubstützen 16.1, 16.2, 16.3 integriert. Im vorderen Teil des Schiffsrumpfes 2 ist unmittelbar hinter dem Deckhaus 6 ein Hubstützensystem 15.1 zentral auf der Mittelachse 17 angeordnet. Im hinteren Teil des Schiffsrumpfes 2 sind in die Seitenwände 4.1, 4.2 einander gegenüberliegend zwei weitere Hubstützensysteme 15.2, 15.3 integriert.

Jedes Hubstützensystem 15.1, 15.2, 15.3 umfasst einen Torsionskasten, in dem die Hubstützen 16.1, 16.2, 16.3 geführt sind. Die Hubstützen 16.1, 16.2, 16.3 haben am unteren Ende einen stempelförmigen Fuß 18. Die Hubstützen 16.1, 16.2, 16.3 sind in den Torsionskästen in Vertikalrichtung verlagerbar. Hierfür werden in die Hubstützensysteme 15.1, 15.2, 15.3 Antriebe integriert, die z.B. Hydraulikzylinder oder mit Zahnstangen kämmende Zahnräder umfassen. Die Antriebe der Hubstützensysteme 15.1, 15.2, 15.3 haben beispielsweise elektrische Motoren.

Auf den oberen Rändern 19.1, 19.2 der Seitenwände 4.1, 4.2 ist ein Portalkran 20 auf Schienen verfahrbar angeordnet. Der Portalkran 20 hat zwei seitliche Stützen 21.1, 21.2, die unten über Rollen auf den Schienen geführt sind. Oben sind die Stützen 21.1, 21.2 von einer Kranbrücke 22 überbrückt. An der Kranbrücke 22 ist ein nicht gezeigtes Hebezeug mit einem Lastaufnahmemittel angeordnet.

Ferner weist der Portalkran 20 nicht gezeigte Antriebsmittel zum Verfahren des Portalkrans 20 entlang der oberen Ränder 19.1, 19.2 der Seitenwände 4.1, 4.2 auf. Der Portalkran 20 ist von einer Position kurz hinter dem Deckhaus 6 bis auf die Überhänge 9.1, 9.2 verfahrbar, sodass mittels des Hebezuges Lasten durch die Öffnung 13 zwischen den Überhängen 9.1, 9.2 abgefiert werden können.

Im Beispiel ist das Schiff 1.1 mit zwei kompletten Windenergieanlagen 23 bestückt. Die Windenergieanlagen 23 sind zerlegt in ein Fundament 23.1 und einen Mast 23.2, der den Generator mit dem Windrad 23.3 trägt. Das Fundament 23.1 und der Mast 23.2 sind vertikal in einem konisch ausgebildeten Verbindungsbereich zusammensetzbar. Die Fundamente 23.1 sind als Tripoden ausgebildet. Jeder Fuß des Tripoden ist mit einem Nagel 23.4 bestückt, der in einer vertikalen Führungshülse sitzt und in den Meeresgrund eintreibbar ist. Hierfür werden an Bord des Schiffes 1.1 Rammen mitgeführt. Diese sind auf den oberen Enden der Nägel 23.4 montierbar und mittels flexibler Versorgungsleitungen mittels einer Versorgung des Schiffes 1.1 betreibbar. Diese Versorgung kann elektrisch, hydraulisch oder pneumatisch erfolgen.

Die Masten 23.2 und Fundamente 23.1 sind in Längsrichtung des Schiffes 1.1 hintereinander in wechselnder Folge angeordnet, wobei hinten ein Fundament 23.1 positioniert ist.

Die Fundamente und die Masten 23.2 der Windmühlen 23 sind jeweils in Vertikalausrichtung auf dem Lastdeck 14 angeordnet. In dieser Lage sind sie mittels nicht gezeigter Einrichtungen zum Fixieren gehalten bzw. gesichert.

Das Schiff 1.2 von Fig. 2 unterscheidet sich von dem zuvor beschriebenen dadurch, dass es vier Hubstützensysteme 15.1, 15.2, 15.3, 15.4 aufweist. In diesem Schiff 1.2 sind auch vom einander gegenüberliegend in die Seitenwände 4.1, 4.2 zwei Hubstützensysteme 15.1, 15.2 integriert. Auf der Mittelachse 17 des Schiffes 1.2 ist hingegen kein Hubstützensystem angeordnet. Das Schiff 1.2 weist einen größeren Laderaum als das Schiff 1.1 auf.

Gemäß Fig. 2 befindet sich der Portalkran 20 in einer Position auf den Überhängen 9.1, 9.2 zur Aufnahme und Abgabe von Ladung. Das Schiff 1.2 ist wie das Schiff 1.1 mit Windenergieanlagen 23 beladen.

Optional weist das Schiff 1.1 oder 1.2 am Heck 12 eine nicht gezeigte Heckklappe auf, die bei Fahrt geschlossen werden kann, um das Einsteigen von Wellen zu verhindern. Die Heckklappe ist bevorzugt am hinteren Ende des Laderaums bzw. an der Hinterkante 8 des Schiffsbodens 3 angeordnet und erstreckt sich bevorzugt bis zum oberen Rand der Seitenwände 4.1, 4.2.

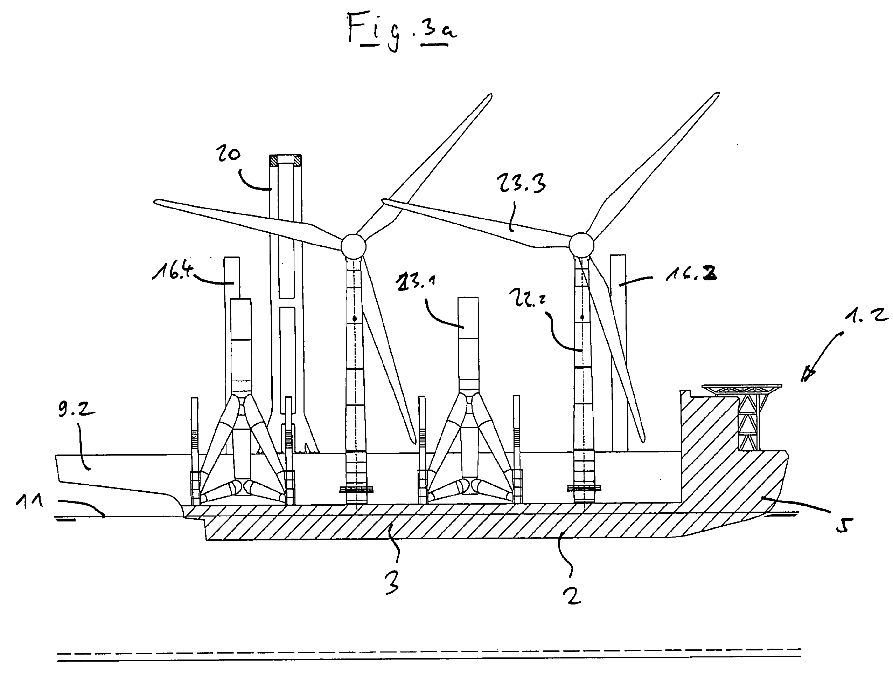

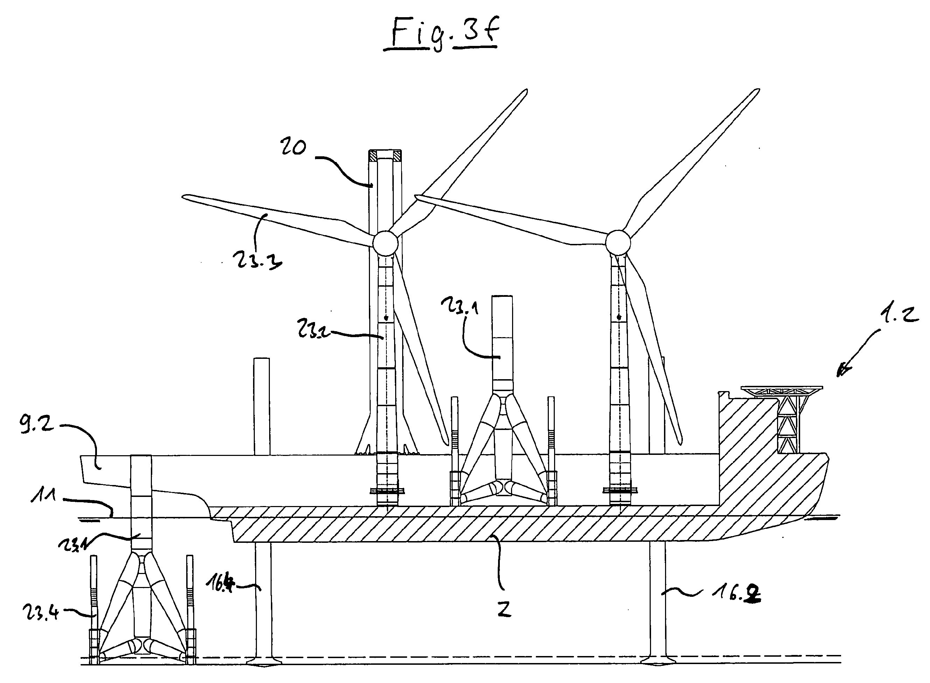

In Fig. 3a wird das Schiff bei der Ankunft am Aufstellort gezeigt, wo es mittels dynamischem Positionierungssystem auf der Stelle gehalten wird.

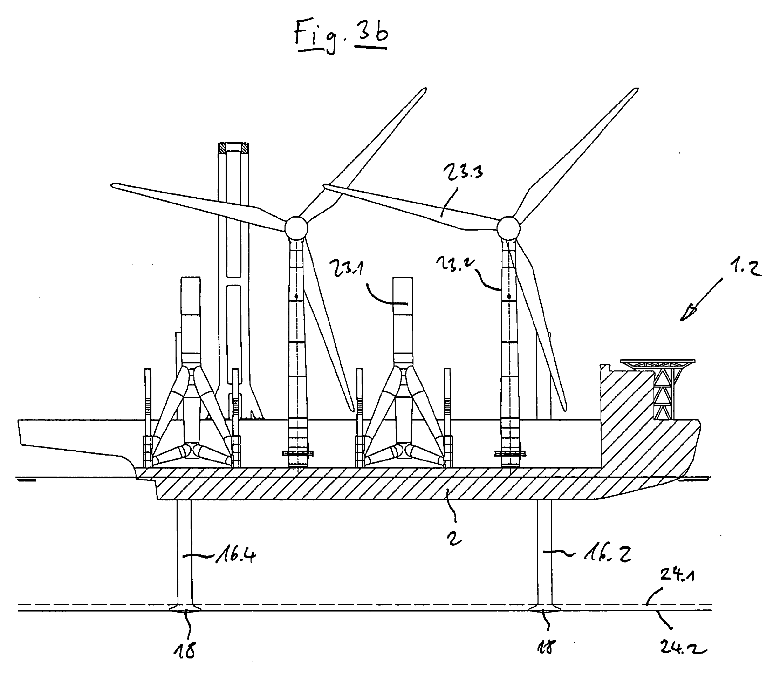

Gemäß Fig. 3b sind am Aufstellort die Hubstützen 16.1, 16.2, 16.3, 16.4 abgesenkt, sodass die Füße 18 die Schlammlinie 24.1 durchdringen und auf festem Untergrund 24.2 aufsetzend. Das Schiff 1.2 wird durch die Hubstützen 16.1, 16.2, 16.3, 16.4 nur ein wenig angehoben, sodass der auf den Schiffsrumpf 2 wirkende Auftrieb die Hubstützsysteme 15.1, 15.2, 15.3, 15.4 entlastet.

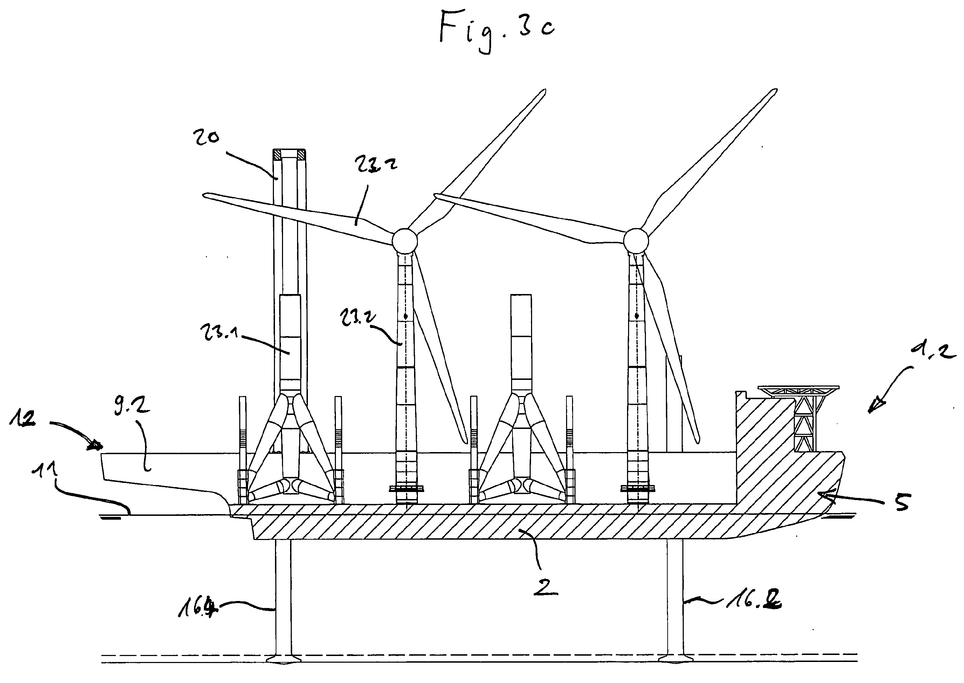

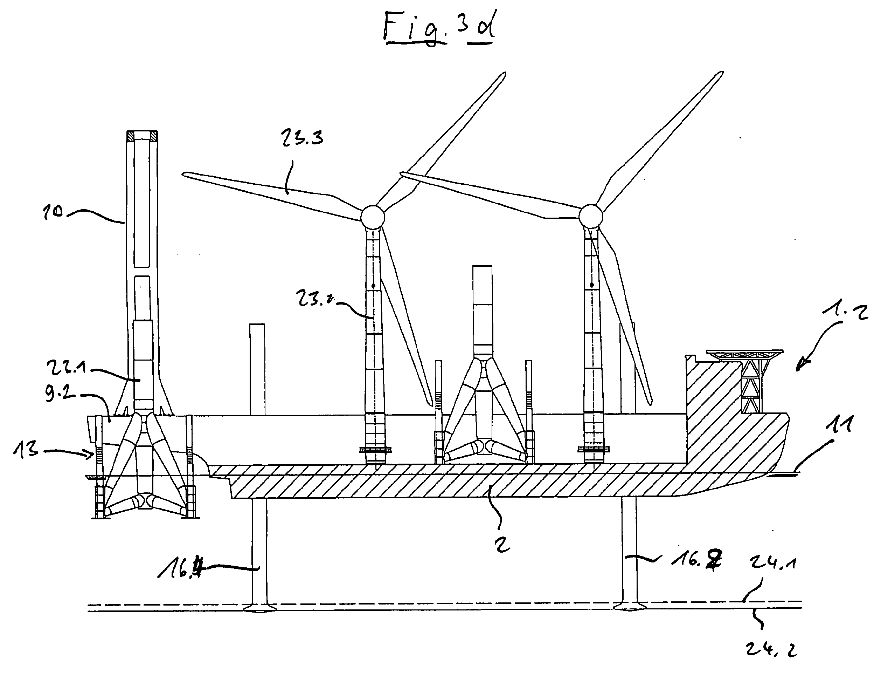

Gemäß Fig. 3c ist der Portalkran 20 über das hintere Fundament 23.1 verfahren, um dieses mit den nicht gezeigten Lastaufnahmemitteln aufzunehmen. Gemäß Fig. 3d fiert der Portalkran 20 das Fundament 23.1 zwischen den Überhängen 9.1, 9.2 durch die Öffnung 13 ab. Gemäß Fig. 3c sitzt das Fundament 23.1 auf dem Meeresboden 24 auf, sodass die Nägel 22.4 eingetrieben werden können, In dieser Position ragt das Fundament 23.1 mit dem Verbindungsbereich über die Wasserlinie 11 hinaus.

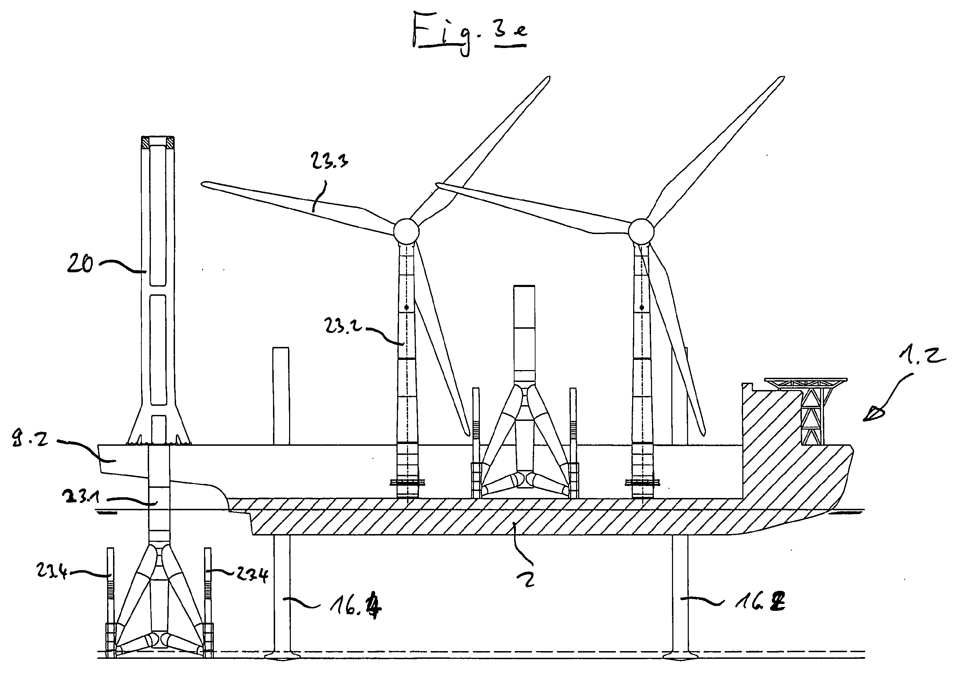

Danach fährt der Portalkran 20 gemäß Fig. 3e zum hinteren Mast 23.2 und nimmt diesen mit den Lastaufnahmemitteln auf.

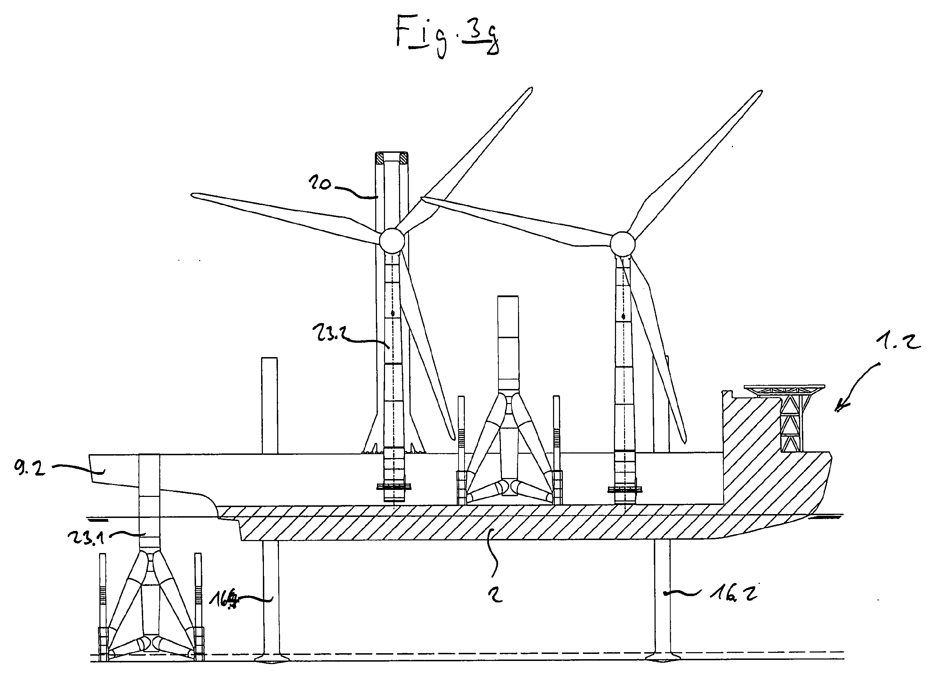

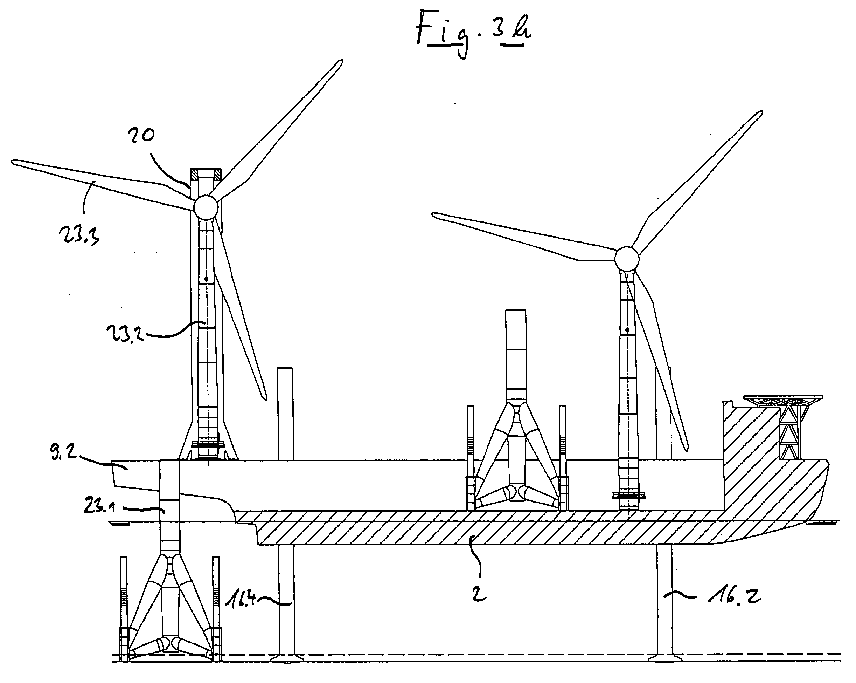

Fign. 3g und h zeigen das Schiff 1.2 beim Transport des Mastes 23.2 zum Fundament 23.1.

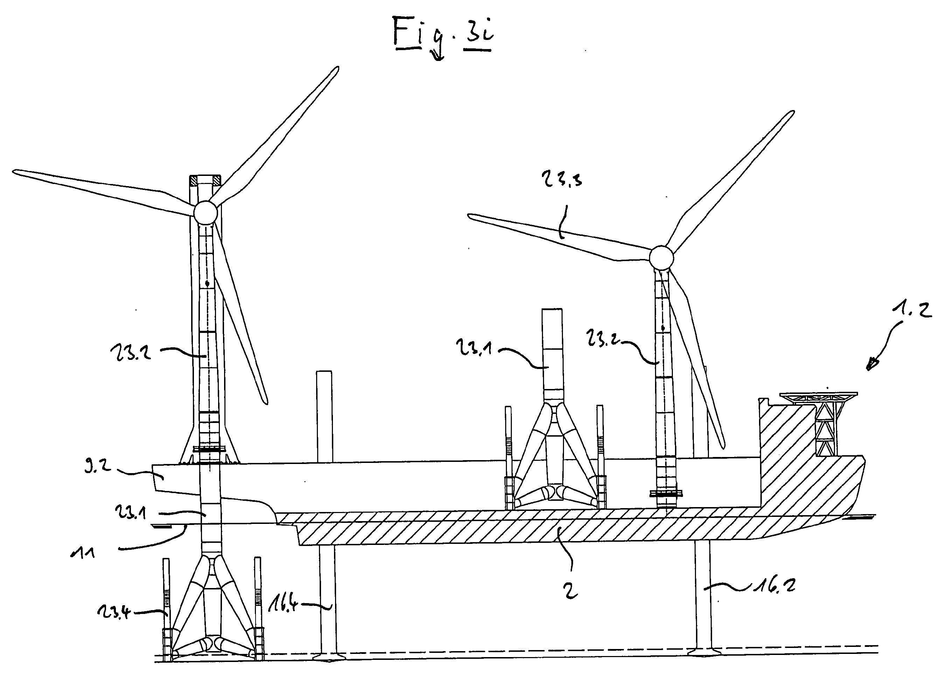

Gemäß Fig. 3i werden der Mast 23.2 mit dem Fundament 23.1 an den konischen Verbindungsbereichen zusammengefügt. Aufgrund der Abstützung des Schiffes 1.2 über die Hubstützen 16.1, 16.2, 16.3, 16.4 kann das Fundament 23.1 sehr genau vertikal ausgerichtet und leicht mit dem Mast 23.2 zusammengefügt werden.

Danach werden die Hubstützen 16.1, 16.2, 16.3, 16.4 hochgefahren und das Schiff 1.2 zu einem weiteren Aufstellort manövriert, wo die Teile 23.1, 23.2 der weiteren Windmühle 23 aufgestellt werden.

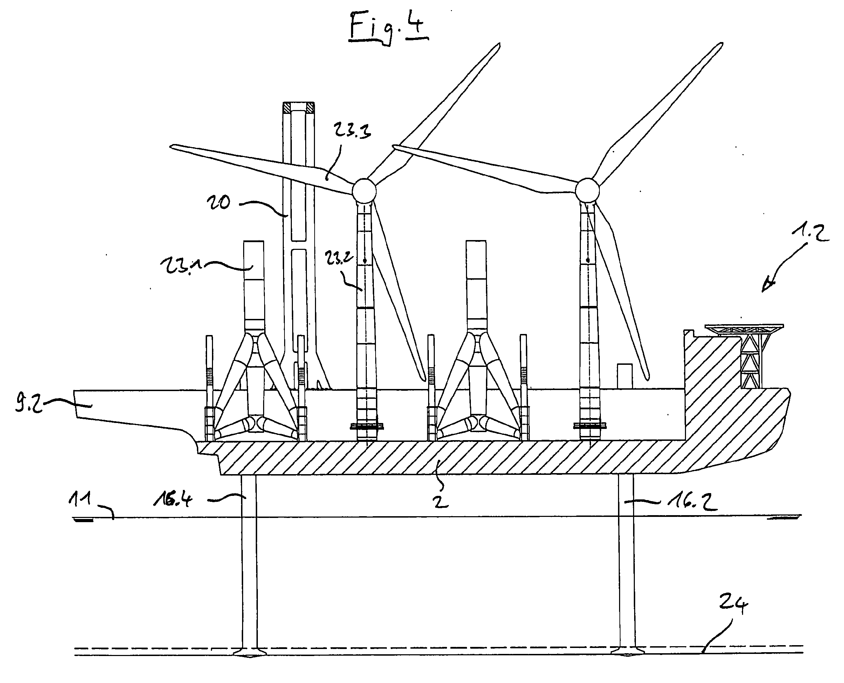

Gemäß einer weiteren Ausgestaltung, in Fig. 4 verdeutlicht kann das Schiff 1.2 mittels der Hubstützen 16.1, 16.2, 16.3, 16.4 angehoben werden, sodass der Schiffsrumpf 2 oberhalb der Wasserlinie 11 angeordnet ist. Dies hat den Vorteil, dass die Seegangsbelastungen auf den Schiffsrumpf und das Hubstützensystem erheblich reduziert werden.

Fig. 5 zeigt das Schiff 1.2 beim Beladen mit Windenergieanlagen 23. Hierfür wird das Schiff 1.2 in einem Hafen mit dem Heck 12 an eine Pier 25 herangefahren. Dies ist in Fig. 5a gezeigt. Gemäß Fig. 5b wird das Schiff 1.2 so manövriert, dass es zwischen den Überhängen 9.1, 9.2 eine Beladeposition 26 für Windenergieanlagen 23 aufnimmt, auf der bereits ein Mast 23.1 bereitsteht. In dieser Position wird das Schiff 1.2 vom dynamischen Positionierungssystem gehalten. Dabei werden die Hubstützen 16.1, 16.2, 16.3, 16.4 abgesenkt, sodass die Füße 18 in den Grund 27 des Hafens eindringen und das Schiff 1.2 in der Beladeposition fixieren, wie in Fig. 5c gezeigt.

Danach wird gemäß Fig. 5d der Portalkran 20 auf die Überhänge 9.1, 9.2 verfahren, bis er den Mast 23.2 übergreift. Die Lastaufnahmemittel werden am Mast 23.2 befestigt und der Mast 23.2 mittels des Portalkrans 20 in die Position von Fig. 5e transportiert. In dieser Position wird er mittels geeigneter Einrichtungen zum Fixieren am Schiffsrumpf 2 gehalten und gesichert.

Danach wird der Portalkran 20 nach hinten verfahren, wie in Fig. 5f gezeigt. Zwischen den Überhängen ist bereits ein Fundament 23.1 bereitgestellt. Der Portalkran 20 fährt auf die Überhänge 9.1, 9.2 in die in Fig. 5g gezeigte Position. Die Lastaufnahmemittel nehmen das Fundament 23.1 auf und der Portalkran 20 hebt es in die in Fig. 5h gezeigte Position im Laderaum. In dieser Zeichnung ist bereits ein weiterer Mast 23.2 gezeigt, der am Bereitstellort 26 platziert ist. In der bereits beschriebenen Weise nimmt der Portalkran 20 den weiteren Mast 23.2 und ein weiteres Fundament 23.1 auf, bis das Schiff 1.2 komplett mit zwei Windenergieanlagen 23 bestückt ist, wie in Fig. 5i gezeigt. Danach werden gemäß Fig. 5j die Hubstützen 16.1, 16.2, 16.3, 16.4 hochgefahren und das Schiff 1.2 zum Aufstellort gefahren.

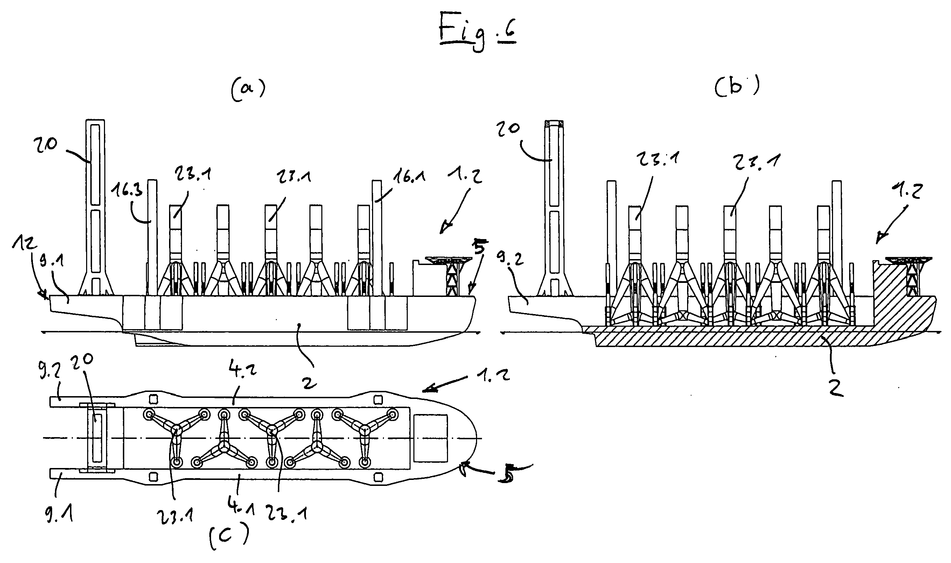

Fig. 6 zeigt eine alternative Bestückung des Schiffes 1.2 ausschließlich mit fünf Fundamenten 23.1. Diese Bestückung kann der Bestückung mit kompletten Windenergieanlagen 23 aus Fundamenten 23.1 und Masten 23.2 vorgezogen werden, wenn beispielsweise bei ungünstigen See- und Wetterverhältnissen es ratsam erscheint, eine weniger hohe Last zu transportieren. Mit dem solchermaßen bestückten Schiff 1.2 werden zunächst ausschließlich Fundamente 23.2 an verschiedenen Aufstellorten platziert.

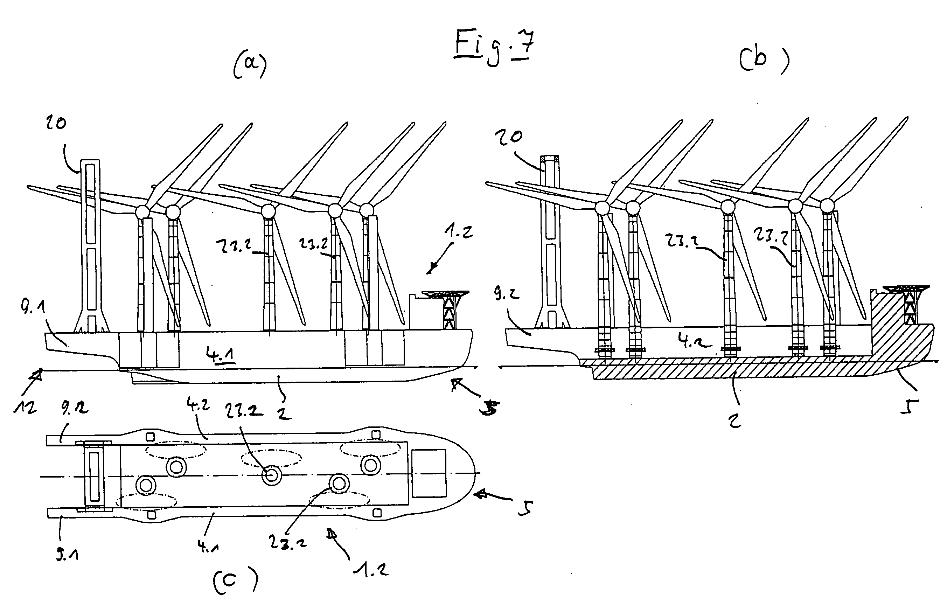

Fig. 7 zeigt eine alternative Bestückung des Schiffes 1.2 ausschließlich mit Masten 23.2. Diese Bestückung kann bei schönem Wetter und günstigen Seeverhältnissen vorgezogen werden, um bereits am Aufstellort platzierte Fundamente 23.1 mit Masten 23.2 zu bestücken.

## Patentansprüche

1. Schiff zum Befördern und Aufstellen von Offshore-Strukturen mit
- einem Schiffsrumpf (2) mit einem U-förmigen Querschnitt, der ein offenes Heck (12) hat und achterlich über die Hinterkante (8) des Schiffsbodens (3) hinausstehende Überhänge (9.1, 9.2) der Seitenwände (4.1, 4.2) aufweist, **gekennzeichnet durch**
- in den Schiffsrumpf (2) integrierte Hubstützensysteme (15.1, 15.2, 15.3, 15.4) mit Hubstützen (16.1, 16.2, 16.3, 16.4), die in Vertikalrichtung mit ihren unteren Enden (18) in Positionen unterhalb des Schiffsbodens (2) verfahrbar sind und
- einen auf den oberen Rändern (19.1, 19.2) der Seitenwände (4.1, 4.2) verfahrbaren Kran (20).

2. Schiff nach Anspruch 1, bei dem der Kran (20) eine Kranbrücke (22) aufweist.

3. Schiff nach Anspruch 2, bei dem der Kran ein Portalkran (20) ist, der die Kranbrücke (22) auf Stützen (21.1, 21.2) trägt, die auf den oberen Rändern (19.1, 19.2) der Seitenwände (4.1, 4.2) verfahrbar sind.

4. Schiff nach einem der Ansprüche 1 bis 3, bei dem die Seitenwände (4.1, 4.2) im Bereich der Überhänge (9.1, 9.2) an der Unterseite ausgespart sind, sodass der untere Rand der Überhänge oberhalb der Wasserlinie (11) des Schiffsrumpfs (2) bei Fahrt angeordnet ist.

5. Schiff nach einem der Ansprüche 1 bis 4, das als Halbtaucher mit in den Schiffsrumpf (2) integrierten Ballasttanks und Pumpen zum Befüllen der Ballasttanks mit Ballastwasser und/oder Lenzen des Ballastwassers aus den Ballasttanks versehen ist.

6. Schiff nach einem der Ansprüche 1 bis 5, das drei Hubstützensysteme (15.1, 15.2, 15.3) aufweist, wobei ein Hubstützensystem (15.1) auf der Mittelachse (17) vom in den Schiffsrumpf (2) integriert ist und zwei weitere Hubstützensysteme (15.2, 15.3) im Schiffsrumpf (2) hinten in die beiden Seitenwände (4.1, 4.2) integriert sind.

7. Schiff nach einem der Ansprüche 1 bis 5, das vier Hubstützensysteme (15.1, 15.2, 15.3, 15.4) aufweist, wobei zwei Hubstützensysteme (15.1, 15.2) im Schiffsrumpf (2) vom einander gegenüberliegend in die Seitenwände (4.1, 4.2) integriert sind und zwei weitere Hubstützensysteme (15.3, 15.4) im Schiffsrumpf (2) hinten einander gegenüberliegend in die Seitenwände (4.1, 4.2) integriert sind.

8. Schiff nach einem der Ansprüche 1 bis 7 mit einem vom auf dem Schiffsrumpf (2) angeordneten Deckshaus (6).

9. Schiff nach einem der Ansprüche 1 bis 8 mit einem Schiffsschraubenantrieb und vorderen und hinteren Manövrierhilfen.

10. Schiff nach einem der Ansprüche 1 bis 9 mit einem dynamischen Positionierungssystem.

11. Schiff nach einem der Ansprüche 1 bis 10, das Einrichtungen zum Fixieren von Fundamenten (23.1) und/oder Masten (23.2) von Windenergieanlagen (23) in vertikaler Ausrichtung auf dem Schiffsrumpf (2) aufweist.

12. Schiff nach einem der Ansprüche 1 bis 11, das Aufnahmen für Fundamente (23.1) und/oder Masten (23.2) von Windenergieanlagen (23) und/oder Befestigungseinrichtungen für Laschsysteme aufweist.

13. Schiff nach einem der Ansprüche 1 bis 12 bestückt mit mehreren in Richtung der Schiffslängsachse hintereinander angeordneten Fundamenten (23.1) oder Masten (23.2) von Windenergieanlagen (23) oder abwechselnd Masten (23.2) und Fundamenten (23.1) von Windenergieanlagen (23).

14. Schiff nach einem der Ansprüche 1 bis 13, das mit einer Heckklappe zum Verschließen des offenen Hecks (12) versehen ist.

15. Verfahren zum Befördern und Aufstellen von Offshore-Strukturen mit einem Schiff gemäß einem der Ansprüche 1 bis 13, bei dem
- das Schiff (1) mit den Offshore-Strukturen (23) beladen wird,
- das beladene Schiff (1) zum Aufstellort der Offshore-Strukturen (23) gefahren wird,
- am Aufstellort das Schiff (1) mittels Hubstützen (16) am Meeresgrund fixiert wird,
- die Offshore-Strukturen (23) mittels des Krans (20) zwischen den achterlichen Überhängen (9.1, 9.2) der Seitenwände (4.1, 4.2) am Aufstellort abgesetzt werden und
- die Hubstützen (16) vom Meeresgrund (24) gelöst werden.

16. Verfahren nach Anspruch 15, bei dem das Schiff (1) vor dem Beladen mittels Hubstützen (16) am Grund (27) des Hafens fixiert wird und nach dem Beladen die Hubstützen (16) vom Grund (27) des Hafens gelöst werden.

17. Verfahren nach Anspruch 15 oder 16, bei dem das Schiff (1) beim Verankern am Meeresgrund (24) durch Fluten der Ballasttanks tiefer eingetaucht wird.

18. Verfahren nach Anspruch 15 oder 16, bei dem das Schiff (1) mittels der Hubstützen (16) mit dem Schiffsrumpf (2) zumindest teilweise aus dem Wasser herausgehoben wird.

19. Verfahren nach einem der Ansprüche 15 bis 18, bei dem das Schiff (1) bis zum Fixieren der Hubstützen (16) im Meeresgrund (24) mittels eines dynamischen Positionierungssystems am Aufstellort der Offshore-Strukturen (23) positioniert wird.

20. Verfahren nach einem der Ansprüche 15 bis 19, bei dem das Schiff (1) mit Offshore-Strukturen (23) beladen wird, indem das Schiff (1) mit den achterlichen Überhängen (9.1, 9.2) der Seitenwände (4.1, 4.2) über eine Pier (25) gefahren wird, so dass die Überhänge (9.1, 9.2) zwischen sich einen Bereitstellort (26) für Offshore-Strukturen (23) aufnehmen und auf dem Bereitstellort (26) platzierte Offshore-Strukturen (23) mit Hilfe des Kranes (20) aufgenommen und auf dem Schiffsrumpf (2) platziert werden.

21. Verfahren nach einem der Ansprüche 15 bis 20, bei dem das Schiff (1) mit Windenergieanlagen (23) beladen und die Windenergieanlagen (23) am Aufstellort aufgestellt werden.

22. Verfahren nach einem der Ansprüche 15 bis 21, bei dem das Schiff (1) mit Fundamenten (23.1) und/oder Masten (23.2) von Windenergieanlagen (23) in vertikaler Ausrichtung beladen wird und die Fundamente (23.1) und/oder Masten (23.2) von Windenergieanlagen (23) am Aufstellort aufgestellt werden.

23. Verfahren nach Anspruch 22, bei dem das Schiff (1) in Längsrichtung hintereinander mit mehreren Fundamenten (23.1) von Windenergieanlagen (23) oder mehreren Masten (23.2) von Windenergieanlagen (23) oder abwechselnd Masten (23.2) und Fundamenten (23.1) von Windenergieanlagen (23) beladen wird und am Aufstellort die Fundamente (23.1) aufgestellt oder die Masten (23.2) von Windenergieanlagen (23) auf Fundamenten (23.1) von Windenergieanlagen (23) angebracht oder abwechselnd Fundamente (23.1) aufgestellt und darauf die Masten (23.2) angebracht werden.

24. Verfahren nach einem der Ansprüche 15 bis 23, bei dem bei Fahrt der Laderaum des Schiffes durch eine Heckklappe verschlossen wird.

## Claims

1. A ship for transporting and setting up offshore structures, with
• a hull (2) with an U-shaped cross section, which has an open stem (12) and comprises overhangs (9.1, 9.2,) of the sidewalls (4.1, 4.2) extending beyond the rear edge (8) of the ship's bottom (3) at the rear end, **characterised by**
• jack-up leg systems (15.1, 15.2, 15.3, 15.4), integrated into the hull (2) and having jack-up legs (16.1, 16.2, 16.3, 16.4), which can be moved in a vertical direction into positions below the ships's bottom (2) with their lower ends (18), and
• a crane (20), movable on the upper edges (19.1, 19.2) of the sidewalls (4.1, 4.2).

2. The ship according to claim 1, wherein the crane (20) comprises a crane bridge (22).

3. The ship according to claim 2, wherein the crane is a gantry crane (20) which bears the crane bridge (22) on supports (21.1, 21.2) that are movable on the upper edges (19.1, 19.2) of the sidewalls (4.1, 4.2).

4. A ship according to any one of claims 1 to 3, wherein the sidewalls (4.1, 4.2) are cut out on the bottom side in the area of the overhangs (9.1, 9.2), so that the lower edge of the overhangs is arranged above the water line (11) of the hull (2) during the way.

5. A ship acco rding to any one of claims 1 to 4, which, as a semi-submersible, is provided with ballast tanks integrated into the hull (2) and with pumps to fill the ballast tanks with ballast water and/or to drain the ballast water out of the ballast tanks.

6. A ship according to any one of claims 1 to 5, which comprises three jack-up leg systems (15.1, 15.2, 15.3), one jack-up leg system (15.1) being integrated into the hull (2) on the mid-axis (17) ahead, two additional jack-up leg systems (15.2, 15.3) being integrated rear in the hull (2) into the two sidewalls (4.1, 4.2).

7. A ship according to any one of claims 1 to 5, comprising four jack-up leg systems (15.1, 15.2, 15.3, 15.4), two opposite jack-up leg systems (15.1, 15.2) being integrated ahead in the hull (2) into the sidewalls (4.1, 4.2), and two additional opposing jack-up leg systems (15.3, 15.4) being integrated rear in the hull (2) into the sidewalls (4.1, 4.2).

8. A ship according to any one of claims 1 to 7, with a deckhouse (6) arranged ahead on the hull (2).

9. A ship according to any one of claims 1 to 8, with a marine propeller drive and front and rear maneuvering aids.

10. A ship according to any one of claims 1 to 9, with a dynamic positioning system.

11. A ship according to any one of claims 1 to 10, which comprises devices for fixing foundations (23.1) and/or masts (23.2) of wind turbines (23) on the hull (2) in a vertical alignment.

12. A ship according to any one of claims 1 to 11, which comprises seats for foundations (23.1) and/or masts (23.2) of wind turbines (23) and/or fastening devices for lashing systems.

13. A ship according to any one of claims 1 to 12, equipped with several foundations (23.1) or masts (23.2) of wind turbines (23) arranged consecutively in the direction of the ship's longitudinal axis, or with alternating masts (23.2) and foundations (23.1) of wind turbines (23).

14. A ship according to any one of claims 1 to 13, which is provided with a tailgate for closing the open stern (12).

15. A method for transporting and setting up offshore structures using a ship according to any one of claims 1 to 13, wherein
• the ship (1) is loaded with the offshore structures (23),
• the loaded ship (1) is navigated to the setup location for the offshore structures (23),
• the ship (1) is fixed to the seabed at the setup location using jack-up legs (16),
• the offshore structures (23) are set down at the setup location between the rear overhangs (9.1, 9.2) of the sidewalls (4.1, 4.2) by the crane (20), and
• the jack-up legs (16) are released from the seabed (24).

16. The method according to claim 15, wherein before loading, the ship (1) is fixed to the floor (27) of the harbor by means of jack-up legs (16), and after loading, the jack-up legs (16) are released from the floor (27) of the harbor.

17. A method according to claim 15 or 16, wherein the ship (1) is immersed more deeply by flooding the ballast tanks when it is being fixed to the seabed (24).

18. A method according to claim 15 or 16, wherein the ship (1) is lifted at least partially out of the water with the hull (2) by means of the jack-up legs (16).

19. A method according to any one of claims 15 to 18, wherein the ship is positioned at the setup location for the offshore structures (23) by means of a dynamic positioning system until the jack-up legs (16) are fixed in the seabed (24).

20. A method according to any one of claims 15 to 19, wherein the ship (1) is loaded with offshore structures (23) by moving the ship (1) with the rear overhangs (9.1, 9.2) of the sidewalls (4.1, 4.2) over a pier (25), so that the overhangs (9.1, 9.2) encompass a transfer location (26) for offshore structures (23) between themselves , and offshore structures (23) placed on the transfer location (26) are picked up with the aid of the crane (20) and placed on the hull (2).

21. A method according to any one of claims 15 to 20, wherein the ship (1) is loaded with wind turbines (23), and the wind turbines (23) are set up at the setup location.

22. A method according to any one of claims 15 to 21, wherein the ship (1) is loaded with foundations (23.1) and/or masts (23.2) of wind turbines (23) in vertical alignment, and the foundations (23.1) and/or masts (23.2) of wind turbines (23) are set up at the setup location.

23. The method according to claim 22, wherein the ship (1) is loaded with several foundations (23.1) of wind turbines (23) or several masts (23.2) of wind turbines (23) consecutively in a longitudinal direction, or alternately with masts (23.2) and foundations (23.1) of wind turbines (23), and the foundations (23.1) are set up at the setup location, or the masts (23.2) of wind turbines (23) are placed on foundations (23.1) of wind turbines (23), or foundations (23.1) are set up and the masts (23.2) are placed thereon alternately.

24. A method according to any one of claims 15 to 23, wherein the hold of the ship is closed by a tailgate during the way.

## Revendications

1. Bateau pour transporter et établir des structures offshore, avec
• une coque (2) avec une section transversale en forme d'U, qui a une poupe (12) ouverte et comporte des porte-à-faux (9.1, 9.2) des parois latérales (4.1, 4.2) qui s'étendent au-delà du bord arrière (8) du fond du bateau (3) au côté arrière, **caractérisé par**
• des systèmes de support télescopiques (15.1, 15.2, 15.3, 15.4) intégrés dans la coque (2) avec des supports télescopiques (16.1, 16.2, 16.3, 16.4), qui sont mobiles dans la direction verticale avec leurs extrémités inférieures (18) vers des positions au-dessous du fond du bateau (2), et
• une grue (20), mobile sur les bords supérieurs (19.1, 19.2) des parois latérales (4.1, 4.2).

2. Bateau selon la revendication 1, dans lequel la grue (20) comporte un pont roulant (22).

3. Bateau selon la revendication 2, dans lequel la grue est une grue à portique (20) qui porte le pont roulant (22) sur des supports (21.1, 21.2) qui sont mobiles sur les bords supérieurs (19.1, 19.2) des parois latérales (4.1, 4.2).

4. Bateau selon l'une quelconque des revendications 1 à 3, dans lequel les parois latérales (4.1, 4.2) sont évidées au côté inférieur dans la région des porte-à-faux (9.1, 9.2), de sorte que le bord inférieur des porte-à-faux se trouve au-dessus de la ligne de flottaison (11) de la coque (2) pendant la navigation.

5. Bateau selon l'une quelconque des revendications 1 à 4, qui, comme un semi-submersible, est pourvu de citernes de ballast intégrées dans la coque (2) et de pompes pour remplir les citernes de ballast avec de l'eau de ballast et/ou affranchir les citernes de ballast de l'eau de ballast.

6. Bateau selon l'une quelconque des revendications 1 à 5, qui comporte trois systèmes de support télescopiques (15.1, 15.2, 15.3), un système de support télescopique (15.1) étant intégré dans la coque (2) sur l'axe central (17) en avant, deux systèmes de support télescopiques (15.2, 15.3) additionnels étant intégrés aux deux parois latérales (4.1, 4.2) en arrière dans la coque (2).

7. Bateau selon l'une quelconque des revendications 1 à 5, comportant quatre systèmes de support télescopiques (15.1, 15.2, 15.3, 15.4), deux systèmes de support télescopiques (15.1, 15.2) opposés étant intégrés aux parois latérales (4.1, 4.2) en avant dans la coque (2), et deux systèmes de support télescopiques (15.3, 15.4) additionnels opposés étant intégrés aux parois latérales (4.1, 4.2) en arrière dans la coque (2).

8. Bateau selon l'une quelconque des revendications 1 à 7, avec un rouf (6) arrangé en avant sur la coque (2).

9. Bateau selon l'une quelconque des revendications 1 à 8, avec un entraînement à hélice et des assistances au remorquage en avant et en arrière.

10. Bateau selon l'une quelconque des revendications 1 à 9, avec un système de positionnement dynamique.

11. Bateau selon l'une quelconque des revendications 1 à 10, qui comporte des dispositifs pour fixer des fondements (23.1) et/ou mâts (23.2) d'éoliennes (23) sur la coque (2) en alignement vertical.

12. Bateau selon l'une quelconque des revendications 1 à 11, qui comporte des sièges pour fondements (23.1) et/ou mâts (23.2) d'éoliennes (23) et/ou dispositifs de fixation pour des systèmes d'arrimage.

13. Bateau selon l'une quelconque des revendications 1 à 12, équipé de plusieurs fondements (23.1) et/ou mâts (23.2) d'éoliennes (23) arrangés en enfilade dans la direction de l'axe longitudinal du bateau, ou mâts (23.2) et fondements (23.1) d'éoliennes (23) alternants.

14. Bateau selon l'une quelconque des revendications 1 à 13, qui est pourvu d'un hayon arrière pour fermer la poupe (12) ouverte.

15. Procédé de transport et d'établissement de structures offshore utilisant un bateau selon l'une quelconque des revendications 1 à 13, dans lequel
• le bateau (1) est chargé de structures offshore (23),
• le bateau (1) chargé est navigué à la position de mise en place des structures offshore (23),
• dans la position de mise en place, le bateau (1) est fixé sur le lit marin en utilisant des supports télescopiques (16),
• les structures offshore (23) sont abaissées dans la position de mise en place entre les porte-à-faux (9.1, 9.2) en arrière des parois latérales (4.1, 4.2) au travers de la grue (20), et
• les supports télescopiques (16) sont détachés du lit marin (24).

16. Procédé selon la revendication 15, dans lequel avant le chargement, le bateau (1) est fixé sur le fond (27) du port au travers des supports télescopiques (16), et les supports télescopiques (16) sont détachés du fond (27) du port après le chargement.

17. Procédé selon la revendication 15 ou 16, dans lequel le bateau (1) est immergé plus profondément pendant l'ancrage sur le lit marin (24) en noyant les citernes de ballast.

18. Procédé selon la revendication 15 or 16, dans lequel le bateau (1) est au moins partiellement élevé de l'eau avec la coque (2) au travers des supports télescopiques (16).

19. Procédé selon l'une quelconque des revendications 15 à 18, dans lequel le bateau (1) est positionné dans la position de la mise en place des structures offshore (23) au travers d'un système de positionnement dynamique jusqu'à la fixation des supports télescopiques (16) dans le lit marin (24).

20. Procédé selon l'une quelconque des revendications 15 à 19, dans lequel le bateau (1) est chargé de structures offshore (23) en naviguant le bateau (1) au-dessus d'une jetée (25) avec les porte-à-faux (9.1, 9.2) en arrière des parois latérales (4.1, 4.2), de sorte que les porte-à-faux (9.1, 9.2) incluent un endroit d'approvisionnement (26) pour des structures offshore (23) entre eux, et des structures offshore (23) placés sur l'endroit d'approvisionnement (26) sont ramassées à l'aide de la grue (20) et placées sur la coque (2).

21. Procédé selon l'une quelconque des revendications 15 à 20, dans lequel le bateau (1) est chargé d'éoliennes (23), et les éoliennes (23) sont installées sur la position de la mise en place.

22. Procédé selon l'une quelconque des revendications 15 à 21, dans lequel le bateau (1) est chargé de fondements (23.1) et/ou mâts (23.2) d'éoliennes (23) en alignement vertical, et les fondements (23.1) et/ou mâts (23.2) d'éoliennes (23) sont installés sur la position de la mise en place.

23. Procédé selon la revendication 22, dans lequel le bateau (1) est chargé de plusieurs fondements (23.1) d'éoliennes (23) et/ou mâts (23.2) d'éoliennes (23) en enfilade dans la direction longitudinale, ou de mâts (23.2) et fondements (23.1) d'éoliennes (23) alternants, et les fondements (23.1) sont installés dans la position de la mise en place, ou les mâts (23.2) d'éoliennes (23) sont installés sur des fondements (23.1) d'éoliennes (23), ou des fondements (23.1) sont installés et les mâts (23.2) y sont placés de façon alternante.

24. Procédé selon l'une quelconque des revendications 15 à 23, dans lequel la cale du bateau est fermée par un hayon arrière pendant la navigation.
